Europäisches Patentamt

(19) European Patent Office

Office européen des brevets

(11) Publication number: **0 174 795**
**B1**

(12) **EUROPEAN PATENT SPECIFICATION**

(45) Date of publication of patent specification: **10.10.90**

(21) Application number: **85306261.0**

(22) Date of filing: **04.09.85**

(51) Int. Cl.⁵: **C 08 L 95/00**

(54) **Bituminous compositions and preparation thereof.**

(30) Priority: **12.09.84 GB 8423078**

(43) Date of publication of application:
**19.03.86 Bulletin 86/12**

(45) Publication of the grant of the patent:
**10.10.90 Bulletin 90/41**

(84) Designated Contracting States:
**BE DE FR GB NL**

(56) References cited:
**EP-A-0 020 203**
**EP-A-0 096 638**
**FR-A-2 018 045**
**FR-A-2 376 188**
**FR-A-2 533 935**
**US-A-3 844 668**

**The file contains technical information
submitted after the application was filed and
not included in this specification**

(73) Proprietor: **Esso Société Anonyme Française
6 Avenue André Prothin
F-92400 Courbevoie (FR)**

(72) Inventor: **Plaindoux, Marc
12 Sente Frederic Chopin
F-76230 Bois Guillaume (FR)**

(74) Representative: **Fletcher Watts, Susan J. et al
ESSO Engineering (Europe) Ltd. Patents &
Licences Mailpoint 72 Esso House Ermyn Way
Leatherhead, Surrey KT22 8XE (GB)**

Courier Press, Leamington Spa, England.

## Description

This invention relates to bituminous compositions and the preparation thereof; more especially to those which include styrene-butadiene copolymers. Particularly, but not exclusively, the compositions are suitable as binder compositions for road surface coating or dressing and hot mixes. Other applications may include immersion coating, roof waterproofing and joint filler/sealant.

The term bitumen is used herein substantially coterminously with the term asphalt to include appropriate natural materials and also petroleum derived materials.

In a road the surface dressing is the uppermost layer which is exposed to traffic, and generally comprises a layer of binder (consisting of or incorporating bitumen) in which chippings are embedded. This technique is used in the construction of a new pavement and also in the maintenance of old pavements. Such dressings are applied by first depositing a thin layer of binder on the existing worn surface course, and then scattering the chippings and rolling the surface. For some applications a "single" operation involving application of binder followed by application of chippings is employed, whereas sometimes a "double" operation technique is used. In this the binder composition is applied to the road surface, followed by large-sized chippings; thereafter further binder composition is applied followed by smaller-sized chippings.

The binder is in liquid form when applied, and subsequently solidifies at ambient temperature to form, with the chippings, a hard surface dressing which will take the force of moving vehicles without undue wear or deformation. Conventionally the binder layer is applied as a liquid by one of several techniques, each of which is employed to apply the binder at acceptable viscosity to the road surface. Thus, the hot spray method employs heat and optionally a fluxant to reduce the viscosity of the binder; typically application temperatures of 140°C and above are used. The cut-back method employs a relatively high proportion of low boiling point fluxant, e.g. about 15%, to reduce viscosity and application is at a temperature of about 80—100°C. A more recent technique is that where the bituminous binder is applied to the surface to be treated at relatively low or even ambient temperature in the form of a low viscosity emulsion with water (e.g. 30—80%) and optionally a fluxant. The quality of surface dressings required depends on the nature of the road to which they are applied. Thus road surfaces which are subject to high stresses, such as at roundabouts, require very strong binders, and hitherto expensive binder compositions comprising epoxy compounds and bitumen have been used. Somewhat less durable binders are required for road surfaces which simply have steep cambers, and hitherto bitumen modified with rubbers such as styrene-butadiene-styrene (SBS) block copolymers has been used. Both of these high quality binder compositions are used in relatively small volumes, and have relatively high cost.

Conventional "normal quality" binders which are used for the major proportion of road surfaces, and hence in large volumes, have hitherto generally comprised bitumen alone, although in some cases the binder has also included an aliphatic solvent such as kerosene to facilitate handling and application to the road base surface. Some conventional "normal quality" surface dressing binder compositions have also included SBS in admixture with the bitumen, although these have had to be chemically reacted to improve compatibility of the rubber with the bitumen. Furthermore, various EVA's have been used in combination with bitumen in road surface uses, but again, except for special grades, these have suffered from a degree of incompatibility with the bitumen.

Problems encountered with road surface dressings are generally associated with a reduction of expected lifetime, primarily due to the nature of the traffic passing over the road. Heavy traffic is very detrimental to surface dressings. Typically, dressing lifetime is reduced because of indentation of the surface layer; because of ageing of the binder; and because chippings are pulled out of the binder. This latter problem arises if the binder becomes brittle at low temperature, or lacks cohesion at high temperature, or shows a lack of adhesion to the chippings or to the base road surface. A desideratum is, therefore, a binder composition which exhibits high cohesion at high temperature, resistance to low temperatures, and high stiffness. Further, it is desirable that materials used to modify the bitumen used in such binders be readily miscible, i.e. compatible with the bitumen and with any solvents or fluxants which may also be incorporated.

### Prior art

It is known to improve bituminous binding agents by the incorporation therein of:

(I) natural or crepe rubbers [(1) GB—A—460854];

(II) synthetic elastomers or rubber copolymers [(2) GB—A—1304238; (3) GB—A—1385006; (4) GB—A—1324599; (5) GB—A—1324600; (6) GB—A—915445; (7) GB—A—1130385 and (8) GB—A—1440474];

(III) copolymers, in particular, styrene-butadiene copolymers [(9) GB—A—1548541; (10) GB—B—2038848, (11) GB—B—2025986, (12) EP—2023 B1, (13) EP—96638 A1, (14) FR—A—2360630 and (15) GB—A—1330425].

In order to initiate or enhance the reaction (which term is used broadly and includes grafting) between the bitumen and rubber/elastomer/copolymer, sulphur is frequently employed. References (1), (9) to (12) and (15) disclose processes in which sulphur is essential, and references (2) to (5) and (8) in which it is optional.

Furthermore, whether or not sulphur is employed, it is known to assist the mixing of the bitumen and the rubber/elastomer/copolymer by employing specific solvent oil or flux oils. This is disclosed in above references (1) to (3), (6) to (8) and (11) to (13) where such use is essential; and references (4), (5) and (14) where it is optional, but normally preferred.

The improvement obtained in the prior art processes is generally some increase in softening temperature (ring and ball) compared with a bitumen of the same penetration but not containing the polymer. Sometimes the brittleness temperature (Fraass point) is also decreased. Almost always the elastomeric properties of the binding agent are improved.

Summary of the invention

It is an object of the present invention to provide a bituminous binder, and process for the manufacture thereof, having improved softening temperatures and brittleness temperatures.

In one aspect the invention provides a bituminous binder composition for use in surface dressing of roads, comprising an aromatic oil fluxed bitumen of penetration over 220 (mm/10), modified with a styrene-butadiene copolymer and further containing a light aliphatic hydrocarbons solvent and/or a light aromatic hydrocarbons solvent.

In another aspect the invention provides a process for preparing a bitumen/styrene-butadiene copolymer composition, comprising the steps of:

(a) blending together at a temperature of 140 to 200°C, (i) a bitumen fluxed with a petroleum derived aromatic oil to a penetration of over 220 (mm/10), (ii) a styrene-butadiene copolymer;

(b) mixing the resultant blend for at least 10 minutes at a temperature of 150 to 190°C with 0.01 to 0.6% of sulphur based on the weight of the (unfluxed) bitumen employed; and

(c) mixing the resultant material at a temperature of 125 to 150°C with a light fluxant to decrease the final viscosity of the composition to a required value.

General description

Preferably the bitumen of the fluxed bitumen employed in the initial blending step (a) of the process of the invention is a low penetration bitumen in the range 25 to 70, especially 35 to 60, preferably 40 to 50 (mm/10 ASTM standard method). A mixture of two or more such bitumens may be used.

A suitable petroleum derived aromatic oil fluxant for fluxing such bitumen(s) to a penetration above 220 has a kinematic viscosity of at least 900 cSt at 40°C, preferably at least 1000. Generally, the flash point of the aromatic oil fluxant is at least 200°C, preferably 230 to 250°C, as measured by the ASTM D 92 method. Suitable boiling ranges would lie within the broad overall range of mininum 300°C, or minimum 330°C, maximum 600°C.

The fluxed bitumen employed in the blending step (a) with the styrene-butadiene copolymer preferably has a penetration (mm/10) of at least 300, normally at least 350; suitably in the range 350 to 500, preferably 375 to 425.

The styrene-butadiene copolymer employed in the blending step (a) with the fluxed bitumen is suitably from 1 to 10% by weight, based on the amount of bitumen employed (that is to say, the bitumen content of the fluxed bitumen). A preferred range is 2 to 8%.

The styrene-butadiene copolymer may be a block; disequenced; multisequenced; or a statistical copolymer. Number average molecular weight ranges for such polymers are suitably from at least 30,000. An upper limit of 380,000 is generally suitable. From 50,000 to 380,000 is generally preferred, with from 75,000 to 350,000 being more preferred. Commercially available products include those sold under the trade names Solprene, Cariflex and Finaprene.

The temperature employed in blending step (a) is from 140 to 200°C, more suitably 160 to 180°C. Normally, the blending step will be continued for from 30 min to 2 hours, generally about 1 hour being suitable.

The mixing step (b) is continued for at least 10 min, suitably 15 to 60 min, preferably 25 to 35 min. The temperature will be in the range 150 to 190°C, suitably 160 to 180°C. The amount of sulphur employed normally lies in the range 0.005 to 10.0%, preferably up to 5.0%, based on weight of the copolymer. Normally, too, the sulphur range is 0.01 to 0.3% based on the weight of the unfluxed bitumen employed in step (a); suitably the amount used is from 0.03 to 0.2%, more preferably 0.04 to 0.1%.

By "sulphur" is meant sulphur which is not chemically combined or chemically bonded. Thus, flowers of sulphur is one suitable material.

The resultant product from step (b) is mixed with a light fluxant at a temperature in the range 125 to 150°C. Suitable light fluxants include light aromatic hydrocarbon solvents, light aliphatic hydrocarbon solvents, or a mixture of these. Suitable such fluxants may have a distillation range lying within the broad range 150 to 330°C; for example, 175 to 320°C or 230 to 265°C. Such fluxants are commercially available.

The amount of the light fluxant employed will depend upon the final viscosity it is desired to achieve. It may be found that 10 to 15 wt.% (based upon the total weight of composition including light fluxant) is suitable to provide a road surface dressing composition. Other uses, such as roof sealants may require more or less than that.

Description of preferred embodiments

The invention will now be illustrated, in a non-limitative manner, by the following Example:

Example

Six formulations in accordance with the invention were prepared. The materials, and proportions thereof, employed are indicated in Table 1 below. Formulation III was prepared on a pilot plant scale. Quantities are given as parts by weight.

The method of preparation employed in each case was as follows: 76 parts of the 40/50 bitumen were blended with 24 parts of an aromatic oil fluxant having a boiling range 320 to 580°C. The resultant blend had a penetration of about 400 (mm/10).

Referring to Formulation I as an example, 84.4 parts of the said resultant blend were taken and mixed with 4 parts of the SBS copolymer at 170°C for 1 hour under stirring. As another example, in Formulation V, 86.5 parts blend were mixed with 1.5 parts of the SBS copolymer under the same conditions.

The styrene-butadiene copolymer employed was a block copolymer, 70:30 butadiene:styrene, having a number average molecular weight of approximately 300,000.

The sulphur was then added, the mixture being stirred at 170°C for 30 minutes. After this reaction/chemical modification period the mixture was cooled to 140°C and the light solvent added under a nitrogen stream. The light solvents used were commercially available aromatic or aliphatic solvents, having boiling ranges within the general limits 220°C and 300°C.

TABLE 1

| Formulation | 40/50 bitumen (mm/10) | | Aromatic fluxant | SBS copolymer | S | Light aromatic solvent | Light aliphatic solvent |
|---|---|---|---|---|---|---|---|
| I | 84.4 parts (64.17) | | (20.27) | 4 | 0.04 | 12 | — |
| II | 84.4 parts (64.17) | | (20.27) | 4 | 0.04 | — | 12 |
| III | 84.0 parts (63.8) | | (20.2) | 4 | 0.04 | — | 12 |
| IV | 85.0 parts (64.6) | | (20.4) | 3 | 0.03 | — | 12.0 |
| V | 86.5 parts (65.7) | | (20.8) | 1.5 | 0.015 | — | 12.0 |
| VI | 86.5 parts (65.7) | | (20.8) | 1.5 | 0.075 | — | 12.0 |

The physical properties of the six formulations were measured by conventional techniques and the results are shown in Table 2. Also included in Table 2 are the corresponding values obtained on a commercially available bitumen/styrene butadiene copolymer surface dressing product. The product is known as "STYRELF" and includes about 5% of copolymer. It is a product of Elf France.

The properties of the six formulations of the present invention, and of the known product, were also measured after a curing test. The test involved curing a 1 mm film of each in a ventilated oven at 50°C for 15 days. The results of the curing test are also shown in Table 2.

It will be seen from Table 2 that the products of the invention have a surprisingly good combination of high R & B, low Fraass point and suitable penetration. This is especially so with the product III which was made on a pilot plant scale.

The high ring and ball softening temperatures and low Fraass point endow the products of the invention with a very large workability temperature range, being as much as 115°C in formulation III.

Table 3 shows the results of VIALIT adhesivity tests on blend III. This test is described, for example, in an article by M. Brossel in "Bulletin de Liaison des Laboratoires des Ponts de Chaussees", No. 4 November—December 1963; or in "Avant Projet du Mode Operatoire du Laboratoire Central des Ponts et Chaussees, Paris", March 1973.

As can be seen from the Table, the adhesivity—stone adhesion—was 100% even under the most severe test conditions (5°C).

TABLE 2

| | | | I | II | III | STYRELF |
|---|---|---|---|---|---|---|
| Before curing | Viscosity (cSt) | 100°C<br>120°C<br>140°C<br>160°C | 909<br>386<br>240<br>135 | 997.6<br>391.2<br>232.7<br>136.2 | 879.1<br>472.9<br>265.4<br>153.0 | 1235.8<br>—<br>190.1<br>96.3 |
| | R & B Softening point | (°C) | 45.2 | 55.6 | 69.0 | 29.0 |
| | Penetration (100 g/5 s mm/10) | 0°C<br>10°C | 150<br>>250 | 163<br>— | 220<br>— | 90<br>— |
| After curing | R & B Softening point | (°C) | 78.4 | 82.8 | 88.5 | 57 |
| | Penetration (100 g/5 s mm/10) | 25°C | 106 | 113 | 152 | 83 |
| | Fraass point | (°C) | −21 | −22 | <−27 | −20 |
| | Tensile curve (−10°C, 10 mm/min) Break point | Stress N/m² | $7.3 \times 10^5$ | $6.8 \times 10^5$ | $2.8 \times 10^5$ | $>4 \times 10^4$ |
| | | Elong. % | >380 | >320 | >400 | >400 |

| | | | IV | V | VI |
|---|---|---|---|---|---|
| Before curing<br>Viscosity (mm²/s=cSt) | 100°C<br>120°C<br>140°C<br>160°C | | 857.5<br>318.2<br>168.5<br>99.1 | 314.3<br>153.0<br>78.0<br>41.5 | 418.7<br>195.2<br>103.1<br>60.0 |
| R & B Softening point | (°C) | | 37.6 | <20 | 27.1 |
| Penetration (100 g/5 s mm/10) | 0°C<br>10°C | | 224<br>— | >290<br>— | 283<br>— |
| After curing<br>R & B Softening point | (°C) | | 82.5 | 42.1 | 55.5 |
| Penetration (100 g/5 s mm/10) | 25°C | | 107 | 155 | 165 |
| Fraass point | (°C) | | −17 | −15 | −18 |
| Tensile curve (−10°C, 100 mm/min) Break point | Stress N/m² | | $5.3 \times 10^5$ | $1.6 \times 10^6$ | $5.0 \times 10^5$ |
| | Elongation % | | 148 | 31 | 93 |

5

TABLE 3
VIALIT adhesivity
on blend III

Storage temperature 5°C

Impact at 5°C

| Gravelling temperature | Storage time | Adhesivity |
|---|---|---|
| 5°C | 20 min | 100% |
| | 2 h | 100% |
| | 5 h | 100% |
| 15°C | 2 h | 100% |
| 25°C | 2 h | 100% |

## Claims

1. A process for preparing a bitumen/styrene-butadiene copolymer composition, comprising the steps of:

(a) blending together at a temperature of 140 to 200°C, (i) a bitumen fluxed with a petroleum derived aromatic oil to a penetration of over 220 (mm/10), (ii) a styrene-butadiene copolymer;

(b) mixing the resultant blend for at least 10 minutes at a temperature of 150 to 190°C with 0.01 to 0.6% of sulphur based on the weight of the bitumen content of the said fluxed bitumen; and

(c) mixing the resultant product at a temperature of 125 to 150°C with a light fluxant to decrease the final viscosity of the composition to a required value.

2. A process as claimed in claim 1, wherein the bitumen employed in step (a) has a penetration range of 40 to 50 before fluxed with said aromatic oil.

3. A process as claimed in claim 1 or claim 2, wherein the petroleum-derived aromatic oil has a kinematic viscosity of at least 100 mm²/s (cSt) at 40°C.

4. A process as claimed in any preceding claim, wherein the penetration of the fluxed bitumen in step (a) is at least 350, preferably 375 to 425.

5. A process as claimed in any preceding claim, wherein the styrene-butadiene copolymer has a number average molecular weight of over 30,000; preferably 75,000 to 350,000.

6. A process as claimed in any preceding claim, wherein from 0.01 to 0.3% of sulphur is employed.

7. A process as claimed in any preceding claim, wherein the light fluxant employed in step (c) comprises a light aliphatic hydrocarbon solvent or a light aromatic hydrocarbon solvent or mixture thereof.

8. A process as claimed in any preceding claim, wherein from 1 to 10% by weight of the copolymer is employed in step (a)(ii), based on the weight of bitumen in the fluxed bitumen in step (a)(i).

9. A process as claimed in any preceding claim, wherein step (a) is conducted over a period of from 30 minutes to 2 hours, preferably about 1 hour, and step (b) for a period of at least 10 minutes, preferably from 15 to 60 minutes.

10. The use of a product of the process of any preceding claim in the surface dressing of roads.

## Patentansprüche

1. Verfahren zur Herstellung einer Bitumen/Styrol-Butadien Copolymerzusammensetzung, bei dem man

a) (i) ein mit einem aus Erdöl erhaltenen aromatischen Öl auf eine Penetration von über 220 (mm/10) weichgemachtes Bitumen und (ii) ein Styrol-Butadien Copolymer bei einer Temperatur von 140 bis 200°C mischt,

b) die resultierende Mischung mindestens 10 Minuten lang bei einer Temperatur von 150 bis 190°C mit 0,01 bis 0,6% Schwefel, bezogen auf das Gewicht des Bitumengehalts des weichgemachten Bitumens, mischt und

c) das resultierende Produkt bei einer Temperatur von 125 bis 150°C mit einem leichten Flußmittel mischt, um die Endviskosität der Zusammensetzung auf den erforderlichen Wert zu erniedrigen.

2. Verfahren nach Anspruch 1, bei dem das in Stufe (a) verwendete Bitumen vor dem Weichmachen mit dem aromatischen Öl einen Penetrationsbereich von 40 bis 50 besitzt.

3. Verfahren nach Anspruch 1 oder 2, bei dem das aus Erdöl erhaltene aromatische Öl eine kinematische Viskosität von mindestens 100 mm²/s (cSt) bei 40°C besitzt.

4. Verfahren nach einem der vorangehenden Ansprüche, bei dem die Penetration des weichgemachten Bitumens in Stufe (a) mindestens 350 und vorzugsweise 375 bis 425 beträgt.

5. Verfharen nach einem der vorangehenden Ansprüche, bei dem das Styrol-Butadien Copolymer ein zahlendurchschnittliches Molekulargewicht von über 30000 und vorzugsweise 75000 bis 350000 besitzt.

6. Verfahren nach einem der vorangehenden Ansprüche, bei dem 0,01 bis 0,3% Schwefel verwendet werden.

7. Verfahren nach einem der vorangehenden Ansprüche, bei dem das in Stufe (c) verwendete leichte Flußmittel ein leichtes aliphatisches Kohlenwasserstofflösungsmittel oder ein leichtes aromatisches Kohlenwasserstofflösungsmittel oder eine Mischung derselben umfaßt.

8. Verfahren nach einem der vorangehenden Ansprüche, bei dem, bezogen auf das Gewicht des Bitumens in dem in Stufe (a)(i) vorhandenen weichgemachten Bitumen, in Stufe (a)(ii) 1 bis 10 Gew.% Copolymer verwendet werden.

9. Verfahren nach einem der vorangehenden Ansprüche, bei dem Stufe (a) über einem Zeitraum von 30 Minuten bis 2 Stunden und vorzugsweise von etwa 1 Stunde sowie Stufe (b) über einen Zeitraum von mindestens 10 Minuten und vorzugsweise 15 bis 60 Minuten durchgeführt wird.

10. Verwendung eines Produkts des Verfahrens gemäß einem der vorangehenden Ansprüche zur Oberflächenausstattung von Straßen.

## Revendications

1. Procédé de préparation d'une composition de bitume/copolymère styrène-butadiène comprenant les étapes de:

(a) mélange à une température de 140 à 200°C, de (i) un bitume mélangé à une huile aromatique dérivée du pétrole jusqu'à une pénétration supérieure à 220 (mm/10), (ii) un copolymère styrène-butadiène;

(b) mélange du mélange résultant pendant au moins 10 minutes à une température de 150 à 190°C avec de 0,01 à 0,6% de soufre sur la base du poids de la teneur en bitume dudit bitume mélangé; et

(c) mélange du produit résultant à une température de 125 à 150°C avec un produit de fluxage léger pour abaisser la viscosité finale de la composition à la valeur requise.

2. Procédé selon la revendication 1, dans lequel le bitume employé dans l'étape (a) un intervalle de pénétration de 40 à 50 avant d'être mélangé à ladite huile aromatique.

3. Procédé selon la revendication 1 ou la revendication 2, dans lequel l'huile aromatique dérivée du pétrole a une viscosité cinématique d'au moins 1000 mm²/s (cSt) à 40°C.

4. Procédé selon l'une quelconque des revendications précédentes, dans lequel la pénétration du bitume mélangé (fluxé) dans l'étape (a) est d'au moins 350, de préférence de 375 à 425.

5. Procédé selon l'une quelconque des revendications précédentes, dans lequel le copolymère styrène-butadiène a un poids moléculaire moyen en nombre supérieur à 30 000; de préférence de 75 000 à 350 000.

6. Procédé selon l'une quelconque des revendications précédentes, dans lequel on emploie de 0,01 à 0,3% de soufre.

7. Procédé selon l'une quelconque des revendications précédentes, dans lequel le produit de fluxage léger employé dans l'étape (c) comprend un solvant hydrocarboné aliphatique léger ou un solvant hydrocarboné aromatique léger ou un de leurs mélanges.

8. Procédé selon l'une quelconque des revendications précédentes, dans lequel on emploie de 1 à 10% en poids de copolymère dans l'étape (a)(ii) sur la base du poids de bitume dans le bitume mélangé (fluxé) présent dans l'étape (a)(i).

9. Procédé selon l'une quelconque des revendications précédentes, dans lequel on conduit l'étape (a) pendant une période allant de 30 minutes à 2 heures, de préférence d'environ 1 heure, et l'étape (b) pendant une période d'au moins 10 minutes, de préférence de 15 à 60 minutes.

10. Application d'un produit du procédé de l'une quelconque des étapes précédentes au revêtement de surface des routes.